# EUROPEAN PATENT SPECIFICATION

(11) **EP 2 064 705 B1**
(45) Date of publication and mention of the grant of the patent: **27.02.2013**
(21) Application number: 06791482.0
(22) Date of filing: 22.09.2006
(51) Int. Cl.: G11B 33/04, G11B 23/023

(54) **A MEDIA DISC STORAGE CONTAINER, AND A METHOD OF MOUNTING A MEDIA DISC INFORMATION SHEET THEREON**
MEDIEN-DATENTRÄGERSPEICHERCONTAINER UND VERFAHREN ZUM ANBRINGEN EINES MEDIEN-DATENTRÄGERINFORMATIONSBLATTS DARAN
CONTENANT DE STOCKAGE DE DISQUE MULTIMÉDIA, ET PROCÉDÉ DE MONTAGE D'UNE FEUILLE D'INFORMATIONS DE DISQUE MULTIMÉDIA SUR CELUI-CI

(43) Date of publication of application: 03.06.2009
(60) Divisional application: 09153674.8
(73) Proprietor: Scanavo A/S, 2630 Taastrup (DK)
(72) Inventor: SØLLING, Tino, 2690 Karlslunde (DK)
(74) Representative: Indahl, Peter Jensen
(86) International application number: PCT/DK2006/050045
(87) International publication number: WO 2008/034441

(56) References cited:
- WO-A-01/43132
- GB-A- 2 365 844
- US-A- 5 119 933
- US-A1- 2002 020 641
- US-A1- 2002 197 434

## Description

The present invention relates to a media disc storage container comprising a body portion having a front section interconnected with a back section via a hinge section, which hinge section is integral with the front section and the back section via elongated edge portions formed of flexible material, the container further comprising a media disc information sheet of a transparent polymeric material and having an inner side adhered to or joined with at least the front section on the outer surface of the body portion, which media disk information sheet has a first printed design printed onto said outer side of the media disc information sheet and oriented to be viewed through the media disc information sheet, and a second printed design , which second printed design is oriented to be viewed from outside the media disk storage container.

WO 01/43132 discloses a container where the media disc information sheet is secured to the outer surface of the body portion along the edges of the sheet by using weld bonding or an adhesive cured by heat, ultra-violet light or pressure along the bond line. The information sheet may be arranged to be visible at both sides, i.e. its external side visible from the exterior of the container and its internal side visible from the interior of the container through part of the body portion. In this prior art container there is no securing between the information sheet and the hinge section of the body portion. The sheet is mainly secured to the front section and back section along the section edges remote from and parallel with the hinge section. It is of course important to have proper fixing of the sheet to the body portion in these edge areas because these edge areas are gripped when the container is opened. And it is relatively easy to automate the manufacture of container when designed in this manner. But the looks of the media disc storage container and the presentation of the printed information are on level with other containers on the market.

An object of the present invention is to provide a media disc storage container with an improved and distinct presentation of printed graphics relevant to the contents of the disc in the container.

In view of this the media disc storage container is characterized in that at least one barrier layer is printed on top of said first printed design, and the second printed design is printed on top of the at least one barrier layer.

By performing the printing of both the first printed design and the second printed design onto the same side of the media disc information sheet high quality printing can be used for both designs. The first printed design is printed onto the transparent polymeric material, possibly after the polymeric material has been treated to accept printing, and the printing causes an excellent contact between the colours and the surface receiving the colours. During printing the colours wet the surface so that they afterwards can be viewed at high quality through the transparent polymeric material.

After the first printed design has been printed onto the media disc information sheet then a barrier layer is provided to the sheet on top of the first printed design. And subsequently a second printed design is printed onto the sheet on the outside of the barrier layer that separates the two printed designs. This separation is of some importance not only because the two designs can be different in colours and shapes, but the first printed design is oriented to be viewed through the media disc information sheet and the second design is oriented to be viewed from outside the media disc storage container. They are consequently viewed in opposite horizontal directions (like mirror images) and if one or both of the printed designs contain figurative graphics or text matter, the one printed design could influence the appearance of the other printed design. Such influence is dampened or avoided by using the barrier layer.

Preferably, the barrier layer comprises a printed layer with white pigment. The white pigment serves to present the colours in the printed designs without distorting their colour value. It is possible to use other colours than white in the barrier layer. The barrier layer can alternatively be provided with e.g. black pigment or with a colour contrasting or supplementing the colours in the first printed design or the second printed design. The white pigment in the barrier layer do, however provide great freedom in the choice of colours in the printed designs.

In a preferred embodiment the barrier layer comprises at least two printed layers with white pigment, and preferably at least two serigraphic printed layers. By printing two layers of white the first printed design and the second printed design are effectively prevented from influencing each other and they each appear with only very few or practically none distortion or shadows from the other design.

In the most preferred embodiment the barrier layer comprises at least two serigraphic printed layers. The serigraphic printed layers provides a very dense separation and an image backing that presents design colours in depth, contrast and intensity.

In an embodiment the media disc information sheet has at least one see-through area bordered by printed colour of the first printed design. The see-through areas can be used to provide very distinct presentations of media disc information, and especially in conjunction with the high graphic quality obtainable by the present invention it is possible to present text and picture compositions that stand out from others in the market and signal a quality product, and possibly a product with a high degree of adventure.

Preferably, said at least one see-through area is furthermore bordered by said at least one barrier layer and bordered by printed colour of the second printed design. When the see-through area is only bordered by the first printed design there can, when the container is opened and the first printed image is visible, be areas where the reverse side of the first printed design is visible. In order to avoid this it is preferred that both the barrier layer and the second printed design are also bordering the see-through areas(s). When both printed designs and the barrier layer border the see-through area(s) then there is optimum quality in the presentation of the printed designs both when the media disc container is viewed from the outside and from the inside.

The printed designs can be printed using various techniques such as serigraphy, flexography, letterpress or offset printing. In order to obtain a printing of fine quality it is preferred that the second printed design is a CMYK (cyan-magenta-yellow-black) colour print where at least four colour technique is utilized. Several of the mentioned techniques can provide four colour printing, but most preferably in order to obtain the best presentation of the printed designs the technique is offset printing. This is in particular advantageous with respect to the second printed design as this is the design primarily viewed in the store.

Although it is possible to obtain somewhat lower costs by using a lower print quality for the first printed design it is preferred that also the first printed design is a CMYK (cyan-magenta-yellow-black) colour print, preferably offset printed, so that the printing on the entire media disc container product is of high quality also when viewed after opening the container in order to remove or insert the media disc.

In a preferred embodiment substantially the full area of the inner side of the media disc information sheet registering with the front section of the body portion is adhered to the front section. When the full area of the inner side is adhered to the front section then the first printed design is presented at high quality through the front section. The best presentation of the first printed design viewed from inside the contained when the container has been opened is obtained when there is only little or no distortion of the design due to boundary effects between the print and the information sheet on the first hand and between the information sheet and the front section on the second hand. The printing of the design onto the information sheet ensures low boundary effects on said first hand, and when the full area of the inner side is adhered to the front section the first printed design is not distorted or made significantly less visible by air or other bounding errors between the inner side of the information sheet and the outer surface of the body portion.

When substantially the full area of the inner side of the media disc information sheet registering with the back section of the body portion is adhered to said back section then the container has a high quality appearance also when the container is turned over and viewed from the back side where one typically finds information on installation demands and production details for the media disc.

In order to obtain a neat and attractive appearance of the contained when placed on a shelf with the hinge section facing outwards it is preferred that substantially the full area of the inner side of the media disc information sheet registering with the hinge section of the body portion is adhered to said hinge section. The adherence between the hinge section and the information sheet causes the graphics to be presented in a clearly discernible manner.

The white pigment in the barrier layer is preferably of titanium dioxide as this is well suited for making a white background to the printed designs.

In some instances it can be preferable to present the colours of the printed designs in a manner providing contrast or enhanced presentation of minor colour variations, and then the barrier layer may comprise an opaque layer which is suitable to provide these effects. The opaque layer prevents light from passing through the layer.

In one further embodiment the barrier layer is positioned in between the two printed layers with white pigment. This embodiment combines a very effective separation of the two printed designs with an attractive presentation of the colours in the individual printed design.

The present invention also relates to a method of mounting a media disc information sheet on a media disc storage container that comprises a body portion having a front section interconnected with a back section via a hinge section, which hinge section is integral with the front section and the back section via elongated edge portions formed of flexible material.

The present invention further relates to a method of mounting a media disc information sheet on a media disc storage container that comprises a body portion having a front section interconnected with a back section via a hinge section which hinge section is integral with the front section and the back section via elongated edge portions formed of flexible material, whereby the media disc information sheet is positioned with its inner side facing upwards and with a first printed design on the outer side of the media disc in-formation sheet visible through the upwards facing inner side of the media disc information sheet, and at least one barrier layer printed on top of said first printed design and with a downwards facing second printed design printed on top of the at least one barrier layer, and the closed media disc storage container is positioned with its hinge section facing downwards toward a middle section of the first printed design and is moved down into contact with the media disc information sheet , and subsequently pressure members press simultaneously from outside the media disc information sheet on the back section and the front section to adhere the sheet to the outside of the container at still increasing distances from the hinge sectior until the media disc information sheet has been fully adhered to the back section and the front section

The method according to the present invention is well suited for a production of the media disc storage container as such independently of the production of the media disc information sheet. This is an advantage because one and the same storage container is used for many different media discs, but the media disc information sheet is printed for use with only one and the same produced media disc. The information sheet is displaying information pertaining only to the specific data on the disc, such as a specific game, movie or software. As a consequence of this the media disc storage containers are typically delivered to a company assembling the disc, the information sheet and the container into a consumer ready product.

The method according to the present invention allows the company to mount the media disc information sheet onto the container without opening the container. This is a distinct handling advantage because then the container need only be opened for insertion of the disc proper.

The method further provides the considerable advantage that the risks of entraining air in between the sheet and the container has been reduced by the initial placement of the hinge portion in contact with the inside of the information sheet. This causes a well-defined fixing of the sheet to the outside of the container and a properly controlled starting point for adhering the sheet to the front and the back sections of the container.

With respect to avoiding entrainment of air it is furthermore an advantage that the information sheet has to be moved upwards in relation the container and be bent from horizontal extension to vertical extension in order to be placed against the outer surfaces of the front section and back section of the container.

The pressure members preferably perform sweeping movements directed upwards and outwards along the back section and the front section. The sweeping movements are very effective in the sense that they may be oriented to affect the container from the middle of the front section and back section and outwards towards the vertical edges of the container when this is in position for receiving the sheet.

In the following the invention will be described in more detail by way of example and with reference to the drawing, in which:
Fig. 1 is a view of an open media disc storage container according to the invention seen from the inside and with indication of coloured edge portions that are not to be covered by a media disc information sheet and transparent portions to be covered on the outside with such a sheet,
Fig. 2 is a view of an open media disc storage container according to Fig. 1 prior to applying the media disc information sheet,
Fig. 3 is a side view of the open container showing the media disc information sheet on the front section,
Fig. 4 is a cross sectional view through the container in its open state,
Fig. 5 is a view from the inside of an opened container in another embodiment where the media disc information sheet also is to extend over side surfaces of the container,
Figs. 6 to 8 are illustrations of different embodiments of the media disc information sheet,
Fig. 9 is a detail showing the media disc information sheet on the container,
Figs. 10 and 11 are illustrations of a first printed design and a second printed design, respectively, and

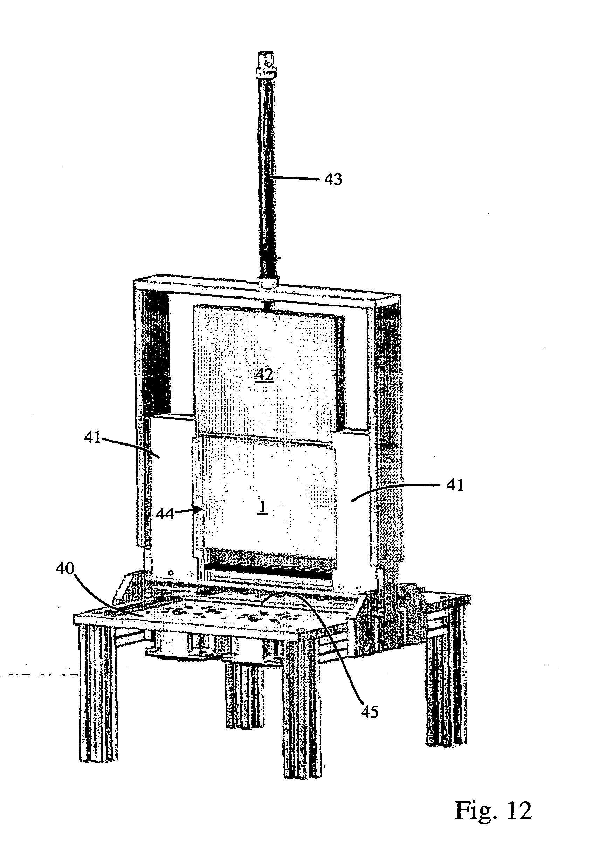

Fig. 12 is an illustration of an apparatus for applying the sheet to the outer surface of the container.

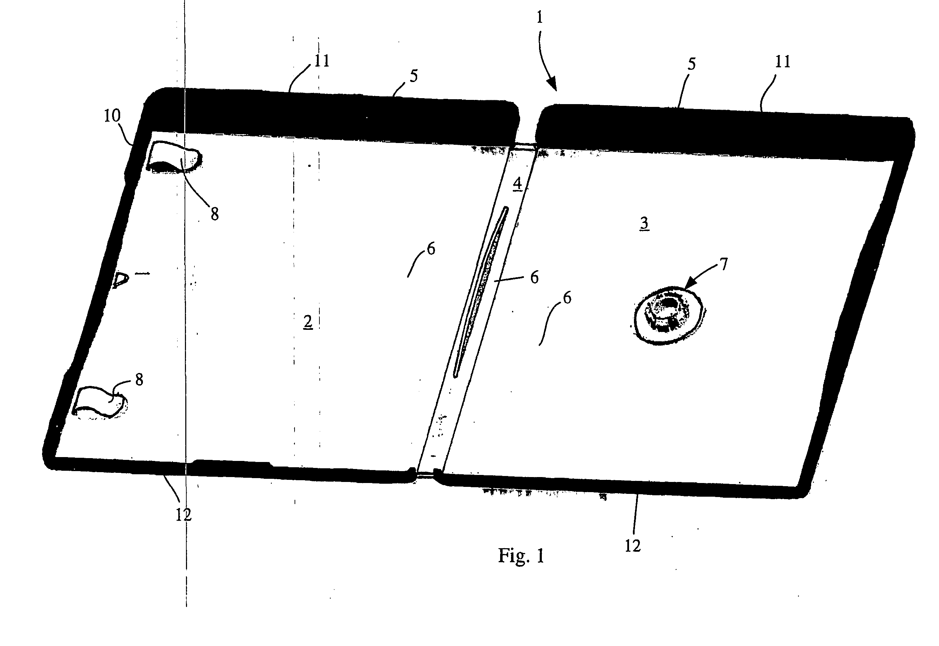

Fig. 1 illustrates a media disc storage container according to the invention seen from the inside in an open state. The container comprises a body portion generally designated 1 and including a front section 2 and a back section 3 interconnected by a hinge section 4. The front section has a first side wall 10 extending along the edge remote from and parallel to the hinge portion, and the back section 3 also has a first side wall 10 extending along the edge remote from and parallel to the hinge portion, and the two first side walls 10 cooperate to form a closed side wall when the container is in the closed state. The first side wall parts are provided with engagement means that can engage to keep the container in the closed state.

The front section has a second side wall 11 along the edge which is intended to be the upper edge of the container, when it is hanging in display in a store, and a third side wall 12 at the opposite edge. The second side wall and the third side wall extend from the hinge portion to the first side wall. The back section 3 is provided with a similar second side wall 11 and a similar third side wall 12.

In the illustrated embodiment the side walls are of a coloured material forming coloured portions, and the front section 2 and the back section 3 have along the second side walls a first margin portion 5 which is also of the coloured material and the margin portions are integral with the associated second side walls.

The front section 2 and the back section 3 have also transparent portions 6 of a second material, which is more transparent than the coloured material. The individual transparent portion 6 extends from the area next to the third side wall 12 to the first margin portion 5 in the a direction parallel to the hinge section and from the first side wall 10 to the hinge section 4 in a direction being transverse to the first-mentioned direction.

The body-portion 1 of the media disc storage container may be made of any suitable materials, and the joining edge portions to the hinge section are formed of flexible material. A suitable material is polypropylene due to its high strength, its ability to flex without breaking, high heat resistance and outstanding crack resistance. Consequently, the body portion 1 is preferably made with the second material of a non-dyed polypropylene and the coloured material of a dyed polypropylene. One advantage of using polypropylene for both materials is the ease by which they can be joined.

A media disc information sheet 14 can be mounted on the outside of the container in a manner making the graphics on the sheet visible through the at least partially transparent portions 6.

The hinge section 4 is of the second material and may form an at least partially transparent portion 6 which is integral with the portions 6 in the front section 2 and the back section 3. The second side walls and the third side walls turn around the corners of the front section 2 and the back section 3 and extend a short distance in direction of a centre line in the container so that they terminate at the portion 6 of the hinge section.

The media disc type may for example be a compact audio disc (CD), a CD-ROM, a CD-RW, a DVD, a HD-DVD, a BD-ROM, a BD-RE, etc, and the media disc storage container is sized to the relevant type of disc, and naturally also to the number of discs in the container.

In the following description of embodiments the same reference numerals are used for details of the same kind and only differences with respect to the above-mentioned embodiments are mentioned.

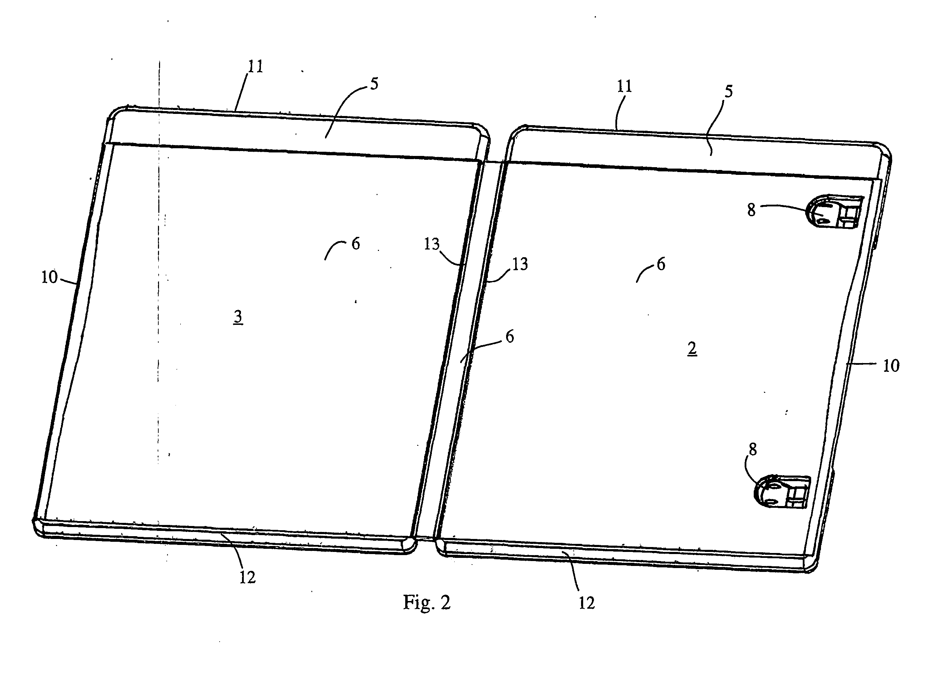

Fig. 2 illustrates another embodiment where the body portion is of the same shape as in Fig. 1, but the edge portions are also of the more transparent second material. It is easier to manufacture this embodiment because the basic parts of the body portion can be injection moulded in one and the same material.

The hinge section 4 is integral with the front section 2 and the back section 3 via edge portions 13 formed of flexible material. The edge portions 13 are of relatively thin thickness and they are elongate and run in parallel with the hinge section in direction from side wall 11 to side wall 12 and they extend along a substantial part of the hinge section, and preferably along the complete length of the hinge section.

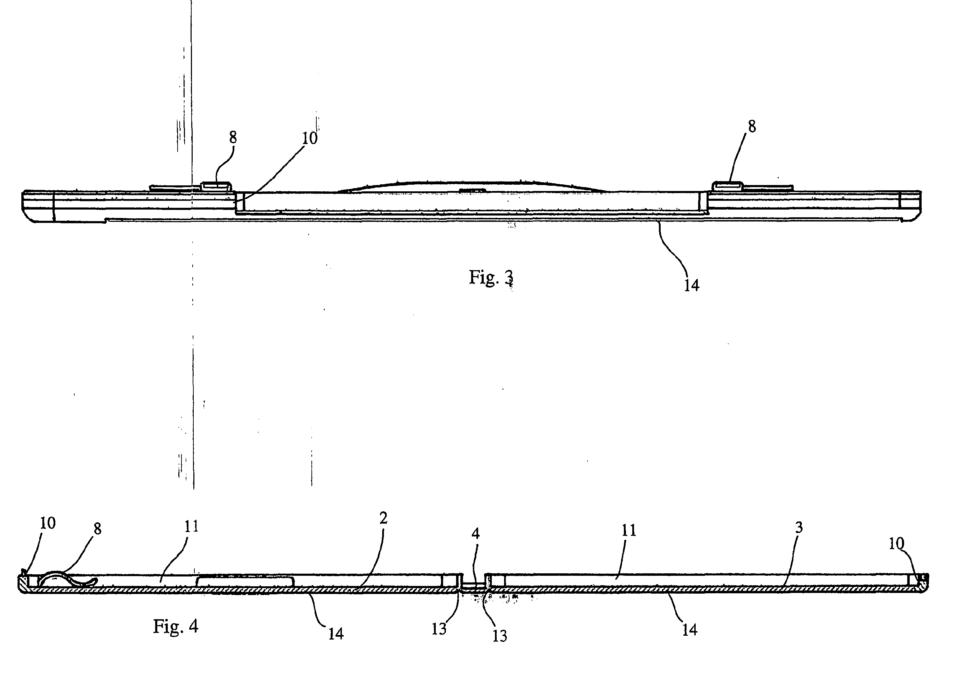

The media disc information sheet 14 may be adhered to or joined with the body portion across the complete area of the front section, or it may extend across only a part of the front section leaving one or more edge areas uncovered as illustrated in Fig. 3 corresponding to the embodiment of Fig. 1. The front section is the most important surface to cover with the media disc information sheet 14 because the sheet serves to inform the public or the users of the contents on the media disc associated with the container. It is however preferred that a media disc information sheet 14 is also adhered to or joined with the back section 3. This is illustrated in Fig. 4 where the two media disc information sheets 14 extend to the hinge section without extending across the hinge section. In a most preferred embodiment the media disc information sheet 14 extends as a single sheet across the front section, the hinge section and the back section. The media disc information sheet 14 can also extend outside around the edge at the first side wall 10 and be adhered to or joined with the outer side of side wall 10.

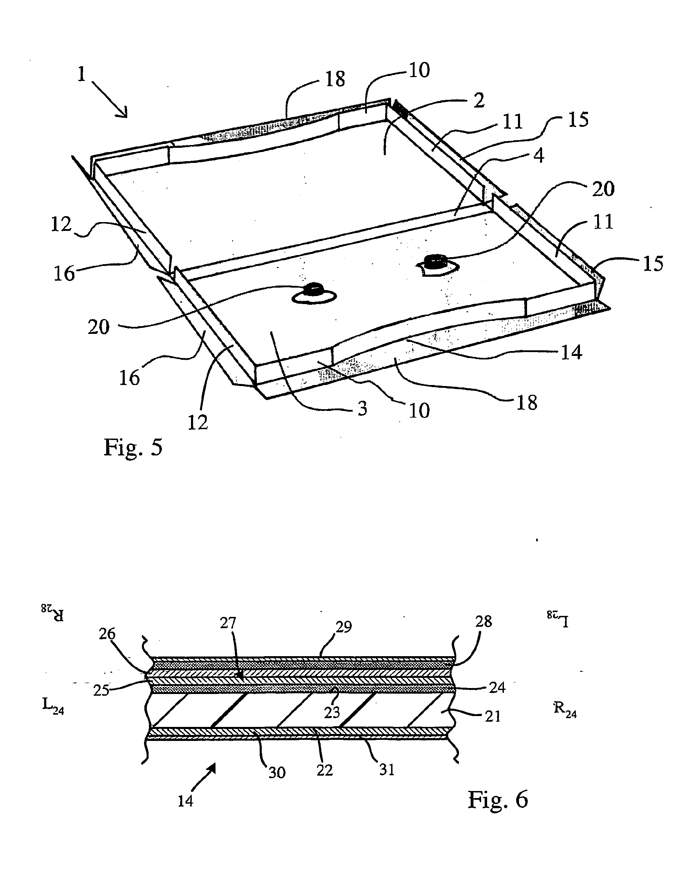

In a further embodiment illustrated in Fig. 5, the media disc information sheet 14 covers substantially the complete outer surface of the body portion of the container, including side walls 10, 11 and 12. In order to cover these side walls the media disc information sheet 14 has side parts 15, 16 and 18 fitting in size with the pertaining side wall 11, 12 and 10, respectively. The container is provided with one or more hubs 20 for holding one or more media discs.

A first embodiment of the media disc information sheet 14 is illustrated in Fig. 6. Media disc information sheet 14 has a body layer 21 of a transparent polymeric material. The body layer has an inner side 22 and an outer side 23. Outer side 23 may be treated in order to readily receive printing colours. The treatment can e.g. be a corona discharge treatment, an irradiation treatment, a heat treatment, a chemical etching or the application of a lacquer on outer side 23. The polymeric material of layer 21 may e.g. be selected from transparent polymers and transparent-copolymers such as polypropylene, polyurethane, polyolefins, polycarbonate, polyester, cellophane, polyacrylate, polystyrene, polyvinyl alcohol, polymethyl pentene, polyethylene terephthalate, polyamide, polyimide, propylene homopolymers, triacetylcellulose, polyacrylonitrile, and polyviny acetate, or mixtures of two or more of these.

A first printed design 24 is applied to outer side 23 with such an orientation of the design that it presents itself correctly when viewed from inside the media disc information sheet through the body layer 21. The designation R₂₄ indicates that the right hand side of the first printed design is to the right in Fig. 6, and L₂₄ indicates that the left hand side of the first printed design is to the left in Fig. 6.

Two printed layers 25, 26 with white pigment are provided on top of the first printed design to form a very effective barrier layer 27. The white pigment is dense and can e.g. be of titanium dioxide or another white pigment like zinc white, and the two layers prevent colour or shades from the first printed design to be seen from outside the media disc information sheet.

A second printed design 28 is applied on the barrier layer 27 with such an orientation of the design that it presents itself correctly when viewed from outside the media disc information sheet. The designation R₂₈ indicates that the right hand side of the first printed design is to the left in Fig. 6, and L₂₈ indicates that the left hand side of the first printed design is to the right in Fig. 6.

A transparent cover layer 29 is provided on top of the second printed design for wear protection of the printed layer. The cover layer may be a lacquer or a thermally applied film of a thermoplastic polymer, such as polyolefins, ethylene, propylene, polyacryls, polyesters, polyurethanes, vinyl acetate polymers, or mixtures of two or more of these.

A layer of adhesive 30 is provided on the inner side 22 of body layer 21. The adhesive may be of e.g. pressure-sensitive type, such as a material having a polymer as a principal constituent, like acrylic type polymers, block copolymers, styrene butadiene rubbers, natural or recovered rubbers, random ethylene and vinyl acetate copolymers, ethylene vinyl acrylic terpolymers, polyisobutylene polyvinylethers etc. Other types of adhesive may be used, like adhesives based on dispersions in organic solvents or in water. (Meth)acrylate esters can be part of such pressure-sensitive adhesive. The layer of adhesive 30 is covered with a polymeric-based or paper-based peel-off layer 31 that may have a silicone release layer on the surface facing the adhesive.

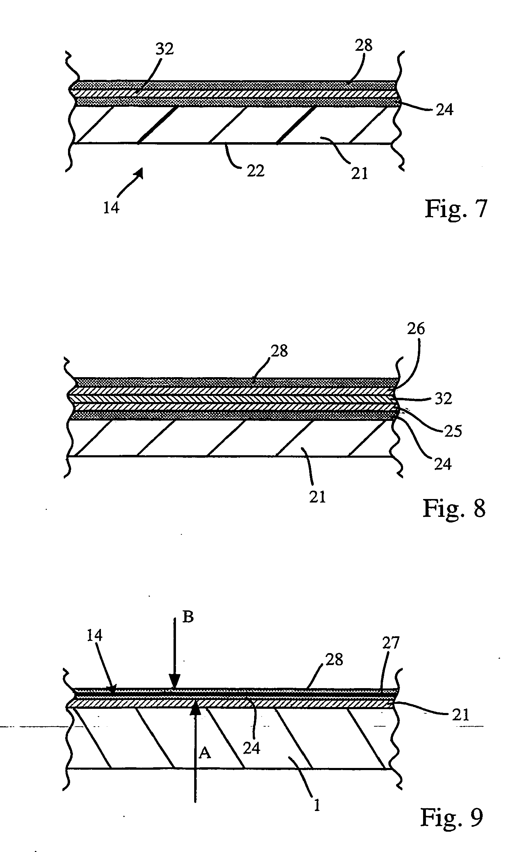

A second embodiment of the media disc information sheet 14 is illustrated in Fig. 7. In this embodiment the inner side 22 is not provided with an adhesive layer. This embodiment is suitable when the body portion of the container is provided with adhesive on the outer surfaces, or when the media disc information sheet 14 is joined with the outer surface of the body portion via heat bonding such as bonding via in-mould labelling at the manufacture of the body portion. Furthermore this embodiment of sheet 14 is also suitable when the adhesive is applied to the inner side 22 in connection with mounting sheet 14 on the body portion. The barrier layer is a single opaque layer 32. The opaque layer may e.g. be of a densely coloured or tinted polymer, such as black polyethylene or black PVC or another material having the opaque property. The opaque layer may be surface treated for readily acceptance of print colours, such as corona treated or lacquer treated. The second printed design 28 forms the outer surface of sheet 14. It is of naturally possible to add a transparent cover layer 29 onto the second printed design, but for some uses the added wear strength is not required and then the cover layer can be omitted. In a third embodiment illustrated in Fig. 8 the barrier layer is composed of opaque layer 32 positioned in between the two printed layers 25 and 26.

When the media disc information sheet 14 has been adhered to or joined with the body portion 1 of the container, the first printed design can be viewed through the transparent material of the body portion 1 and the transparent body layer 21, as illustrated with arrow A in Fig. 9, and the second printed design can be viewed from the outside of the container as illustrated by arrow B.

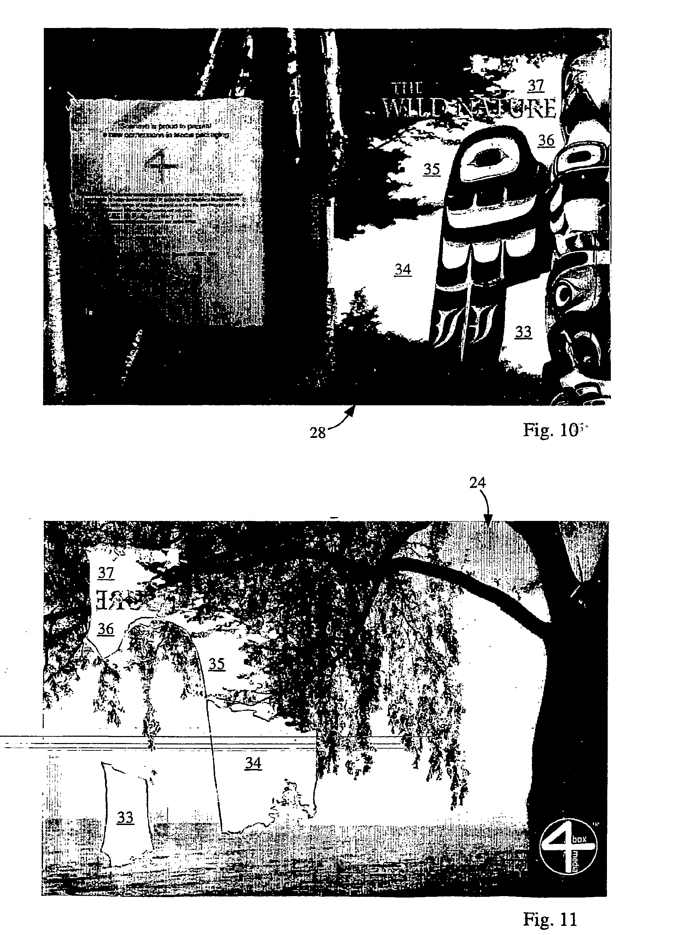

One example of a second printed design 28 is illustrated in Fig. 10, and the corresponding first printed design 24 is illustrated in Fig. 11. The two printed designs are made with see-through areas 33-37 where the transparent body layer is free from print. One see-through area in the first printed design corresponds to a mirrored see-through area in the second printed design, and the printing is performed in such a manner that the corresponding mutually mirrored see-through areas register with one another.

The see-through areas may provide the finished media disc storage container with an eye-catching appearance where the see-through areas follow the contours of the objects depicted in at least one of the printed designs, typically the second printed design 28. The see-through areas can also follow the contour of letters in printed text forming part of the first and/or second printed design.

The first printed design 24 and the second printed design 28 are preferably printed using CMYK colour printing technology. This is well-known print technology providing full-colour prints based on four subsequent printings in the colours cyan, magenta, yellow and black, respectively. Although is a possibility to make images by RGB technology or in the greyscale, the CMYK printing is preferred because it provides the best quality in the printed designs. CMYK printing can be performed as letter print, serigraphic print, flexographic print or offset print, and offset printing is preferred due to the high quality in the printed graphics.

When the barrier layer is a printed layer it is preferably a serigraphic printed layer. It is of course possible to perform the first printed design by e.g. letter print, the barrier layer as serigraphic print and the second printed design as offset print and this could in some instances be economically favourable, but preferably both printed designs are offset printed. It is also possible to print the barrier layer by offset printing and to obtain the desired separation of the images by printing e.g. four or five layers of white in the barrier layer.

When the barrier layer is an opaque layer and the printed designs include look-through areas then the opaque layer has to be cut or punched out in the desired shape or has to be applied with a plate or roller that can impress or heat affect the opaque material so that it is applied in a pattern shaped with the desired look-through area, viz. the opaque is only applied to the media disc information sheet in the areas where the printed designs are present, but not applied to the sheet in the look-through areas.

The media disc information sheet 14 can be mounted on body portion in several different manners. In the most simple version the media disc information sheet 14 can be placed on a table with the inner side with adhesive facing upwards, and then the body portion can be opened and placed onto sheet 14, and then the side parts 15, 16 and 18 can be folded around the edges of the front section 2 and the back section 3 and be adhered to the side walls of the container.

Another, preferred method of mounting the media disc information sheet 14 on the body portion is to place the sheet with the inner side facing upwards on a vacuum table 40 which keeps sheet 14 precisely positioned in relation to a set of vertical guides 41 for precisely guiding the body portion 1 in closed state down towards the underlying sheet 14. An actuator in form of a plate-shaped slide 42 and an actuator cylinder 43, such as a pneumatic cylinder, can press the body portion 1 downward after the body portion 1 has been inserted sideways into the vertical guides at an insertion area 44.

The body portion is inserted into the guides with hinge section 4 facing downwards toward, and sheet 14 is positioned so in the length direction of table 40 that a middle section of the first printed design is vertically below hinge section 4 when located in the track in the guides 41. When actuator cylinder 43 moves slide 42 downwards the body portion is moved down into contact with the media disc information sheet. Although not mandatory, it is preferred that the entire sheet 14 is provided with adhesive so that the middle part of the sheet is fixed to hinge section 4 as this touches the sheet. Then pressure members, not illustrated, press from outside the media disc information sheet simultaneously on the back section and the front section to adhere the sheet to the outside of the body portion 1. The pressure members are preferably brushes or rollers. Preferably that body portion is moved down through an opening 45 in table 40 so that sheet 14 is pulled towards the opening as the body portion is moved down through the opening. At the opening the sheet turns in the downward direction over the pressure members and is laid in against the front section and the back section of the body portion. In this manner the sheet is adhered to the container at still increasing distances from the hinge section until the media disc information sheet has been fully adhered to the back section and the front section. Then the actuator cylinder-is-moved upwards and the body portion is released from the guides 41.

Details from the various above-mentioned embodiments can be varied and the details can also be combined into new embodiments within the scope of the appended patent claims.

## Claims

1. A media disc storage container comprising a body portion (1) having a front section (2) interconnected with a back section (3) via a hinge section (4), which hinge section is integral with the front section and the back section via elongated edge portions (13) formed of flexible material, the container further comprising a media disc information sheet (14) of a transparent polymeric material and having an inner side (22) adhered to or joined with at least the front section (2) on the outer surface of the body portion, which media disk information sheet (14) has a first printed design (24) printed onto the outer side (23) of the media disc information sheet and oriented to be viewed through the media disc information sheet, and a second printed design (28), which second printed design is oriented to be viewed from outside the media disk storage container, **characterized in that** at least one barrier layer (27) is printed on top of said first printed design (24), and the second printed design (28) is printed on top of the at least one barrier layer (27).

2. A media disc storage container according to claim 1, **characterized in that** the barrier layer (27) comprises a printed layer with white pigment.

3. A media disc storage container according to claim 2, **characterized in that** the barrier layer (27) comprises at least two printed layers (25, 26) with white pigment, preferably at least two serigraphic printed layers.

4. A media disc storage container according to any one of claims 1 to 3, **characterized in that** the media disc information sheet (14) has at least one see-through area (33-37) bordered by printed colour of the first printed design (24).

5. A media disc storage container according to claim 4, **characterized in that** said at least one see-through area (33-37) is furthermore bordered by said at least one barrier layer (27) and bordered by printed colour of the second printed design (28).

6. A media disc storage container according to any one of claims 1 to 5, **characterized in that** the second printed design (28) is a CMYK (cyan-magenta-yellow-black) colour print, preferably offset printed.

7. A media disc storage container according to any one of claims 1 to 6, **characterized in that** the first printed design (24) is a CMYK (cyan-magenta-yellow-black) colour print, preferably offset printed.

8. A media disc storage container according to any one of claims 1 to 7, **characterized in that** substantially the full area of the inner side (22) of the media disc information sheet registering with the front section (2) of the body portion (1) is adhered to said front section.

9. A media disc storage container according to any one of claims 1 to 8, **characterized in that** substantially the full area of the inner side (22) of the media disc information sheet registering with the back section (3) of the body portion (1) is adhered to said back section.

10. A media disc storage container according to any one of claims 1 to 9, **characterized in that** substantially the full area of the inner side (22) of the media disc information sheet registering with the hinge section (4) of the body portion (1) is adhered to said hinge section.

11. A media disc storage container according to any one of claims 2 to 10, **characterized in that** the white pigment is titanium dioxide.

12. A method of mounting a media disc information sheet (14) on a media disc storage container that comprises a body portion (1) having a front section (2) interconnected with a back section (3) via a hinge section (4), which hinge section is integral with the front section and the back section via elongated edge portions (13) formed of flexible material, whereby the media disc information sheet (14) is positioned with its inner side (22) facing upwards and with a first printed design (24) on the outer side (23) of the media disc information sheet visible through the upwards facing inner side (22) of the media disc information sheet, and at least one barrier layer (27) printed on top of said first printed design (24), and with a downwards facing second printed design (28) printed on top of the at least one barrier layer (27), and the closed media disc storage container is positioned with its hinge section (4) facing downwards toward a middle section of the first printed design (24) and is moved down into contact with the media disc information sheet (14), and subsequently pressure members press simultaneously from outside the media disc information sheet (14) on the back section (3) and the front section (2) to adhere the sheet (14) to the outside of the container at still increasing distances from the hinge section (4) until the media disc information sheet (14) has been fully adhered to the back section (3) and the front section (2).

13. A method according to claim 12, **characterized in that** the pressure members perform sweeping movements directed upwards and outwards along the back section (3) and the front section (2).

## Patentansprüche

1. Aufbewahrungsbehälter für Medienscheiben, aufweisend ein Gehäuseteil (1) mit einem vorderen Abschnitt (2), der mit einem hinteren Abschnitt (3) über einen Gelenksabschnitt (4) verbunden ist, wobei der Gelenksabschnitt einstückig mit dem vorderen Abschnitt und dem hinteren Abschnitt über längliche Randabschnitte (13) ausgebildet ist, die aus einem flexiblen Material gebildet sind, wobei der Behälter des Weiteren ein Medienscheiben-Informationsblatt (14) aus einem transparenten polymeren Material und mit einer Innenseite (22), die mindestens an dem vorderen Abschnitt (2) an der Außenfläche des Gehäuseteils haftet oder mit dieser verbunden ist, aufweist, wobei das Medienscheiben-Informationsblatt (14) ein erstes gedrucktes Muster (24), das an der Außenseite (23) des M edienscheiben-Informationsblattes gedruckt und so ausgerichtet ist, dass es durch das Medienscheiben-Informationsblatt betrachtet werden kann, und ein zweites gedrucktes Muster (28) aufweist, wobei das zweite gedruckte Muster so ausgerichtet ist, dass es von außerhalb des Aufbewahrungsbehälters für Medienscheiben betrachtet werden kann, **dadurch gekennzeichnet, dass** mindestens eine Sperrschicht (27) an der Oberseite des ersten gedruckten Musters (24) gedruckt ist an der Oberseite der mindestens einen Sperrschicht (27) gedruckt ist.

2. Aufbewahrungsbehälter für Medienscheiben nach Anspruch 1, **dadurch gekennzeichnet, dass** die Sperrschicht (27) eine gedruckte Schicht mit weißem Pigment aufweist.

3. Aufbewahrungsbehälter für Medienscheiben nach Anspruch 2, **dadurch gekennzeichnet, dass** die Sperrschicht (27) mindestens zwei gedruckte Schichten (25, 26) mit weißem Pigment aufweist, vorzugsweise mindestens zwei serigraphische gedruckte Schichten.

4. Aufbewahrungsbehälter für Medienscheiben nach einem der Ansprüche 1 bis 3, **dadurch gekennzeichnet, dass** das Medienscheiben-Informationsblatt (14) mindestens eine Durchsichtsfläche (33-37) aufweist, die von Druckfarbe des ersten gedruckten Musters (24) umrandet ist.

5. Aufbewahrungsbehälter für Medienscheiben nach Anspruch 4, **dadurch gekennzeichnet, dass** die mindestens eine Durchsichtsfläche (33-37) von der oder mindestens einer Sperrschicht (27) umrandet ist und von Druckfarbe des zweiten gedruckten Musters (28) umrandet ist.

6. Aufbewahrungsbehälter für Medienscheiben nach einem der Ansprüche 1 bis 5, **dadurch gekennzeichnet, dass** das zweite gedruckte Muster (28) ein CMYK (Cyan-Magenta-Gelb-Schwarz)-Farbdruck, vorzugsweise ein Offset-Druck ist.

7. Aufbewahrungsbehälter für Medienscheiben nach einem der Ansprüche 1 bis 6, **dadurch gekennzeichnet, dass** das erste gedruckte Muster (24) ein CMYK (Cyan-Magenta-Gelb-Schwarz)-Farbdruck, vorzugsweise ein Offset-Druck ist.

8. Aufbewahrungsbehälter für Medienscheiben nach einem der Ansprüche 1 bis 7, **dadurch gekennzeichnet, dass** im Wesentlichen die volle Fläche der Innenseite (22) des Medienscheiben-Informationsblattes, die mit dem vorderen Abschnitt (2) des Gehäuseteils (1) ausgerichtet ist, an den vorderen Abschnitt geklebt ist.

9. Aufbewahrungsbehälter für Medienscheiben nach einem der Ansprüche 1 bis 8, **dadurch gekennzeichnet, dass** im Wesentlichen die volle Fläche der Innenseite (22) des Medienscheiben-Informationsblattes, die mit dem hinteren Abschnitt (3) des Gehäuseteils (1) ausgerichtet ist, an den hinteren Abschnitt geklebt ist.

10. Aufbewahrungssbehälter für Medienscheiben nach einem der Ansprüche 1 bis 9, **dadurch gekennzeichnet, dass** im Wesentlichen die volle Fläche der Innenseite (22) des Medienscheiben-Informationsblattes, die mit dem Gelenksabschnitt (4) des Gehäuseteils (1) ausgerichtet ist, an den Gelenksabschnitt geklebt ist.

11. Aufbewahrungsbehälter für Medienscheiben nach einem der Ansprüche 2 bis 10, **dadurch gekennzeichnet, dass** das weiße Pigment Titandioxid ist.

12. Verfahren zum Anbringen eines Medienscheiben-Informationsblattes (14) an einem Aufbewahrungsbehälter für Medienscheiben, der ein Gehäuseteil (1) mit einem vorderen Abschnitt (2), der mit einem hinteren Abschnitt (3) über einen Gelenksabschnitt (4) verbunden ist, wobei der Gelenksabschnitt einstückig mit dem vorderen Abschnitt und dem hinteren Abschnitt über längliche Randabschnitte (13) ausgebildet ist, die aus einem flexiblen Material gebildet sind, aufweist, wobei das Medienscheiben-Informationsblatt (14) so positioniert ist, dass seine Innenseite (22) nach oben weist und ein erstes gedrucktes Muster (24) an der Außenseite (23) des Medienscheiben-Informationsblattes durch die nach oben weisende Innenseiten (22) des Medienscheiben-Informationsblattes betrachtet werden kann, und mindestens eine Sperrschicht (27) auf einer Oberseite des ersten gedruckten Musters (24) gedruckt ist und ein zweites gedrucktes Muster (28), das auf der Oberseite der mindestens einen Sperrschicht (27) gedruckt ist, nach unten weist, und der geschlossene Aufbewahrungsbehälter für Medienscheiben so positioniert ist, dass sein Gelenksabschnitt (4) nach unten zu einem mittleren Abschnitt des ersten gedruckten Musters (24) weist und nach unten in einen Kontakt mit dem Medienscheiben-Informationsblatt (14) bewegt wird, und anschließend Presselemente gleichzeitig von außerhalb des Medienscheiben-Informationsblatts (14) am hinteren Abschnitt (3) und am vorderen Abschnitt (2) pressen, um das Blatt (14) an die Außenseite des Behälters bei noch zunehmenden Abständen zum Gelenksabschnitt (4) zu kleben, bis das Medienscheiben-Informationsblatt (14) vollständig an den hinteren Abschnitt (3) und vorderen Abschnitt (2) geklebt ist.

13. Verfahren nach Anspruch 12, **dadurch gekennzeichnet, dass** die Presselemente Streichbewegungen ausführen, die entlang dem hinteren Abschnitt (3) und dem vorderen Abschnitt (2) nach oben und nach außen verlaufen.

## Revendications

1. Récipient de stockage de disques de média, comprenant une partie de corps (1) présentant une section avant (2) interconnectée avec une section arrière (3) par l'intermédiaire d'une section de charnière (4), ladite section de charnière étant intégrée à la section avant et à la section arrière par l'intermédiaire de parties de bord allongées (13) constituées d'un matériau flexible, le récipient comprenant en outre une feuille d'information sur les disques de média (14) constituée d'un matériau polymère transparent et présentant un côté intérieur (22) qui est collé ou joint à au moins la section avant (2) sur la surface extérieure de la partie de corps, ladite feuille d'information sur les disques de média (14) présentant un premier dessin imprimé (24) imprimé sur le côté extérieur (23) de la feuille d'information sur les disques de média et orienté de manière à être vu à travers la feuille d'information sur les disques de média, et un deuxième dessin imprimé (28) imprimé, ledit deuxième dessin imprimé étant orienté de manière à être vu depuis l'extérieur du récipient de stockage de disques de média, **caractérisé en ce que** au moins une couche faisant barrière (27) est imprimée au-dessus dudit premier dessin imprimé (24), et le deuxième dessin imprimé (28) est imprimé au-dessus de ladite au moins une couche faisant barrière (27).

2. Récipient de stockage de disques de média selon la revendication 1, **caractérisé en ce que** la couche faisant barrière (27) comprend une couche imprimée avec un pigment blanc.

3. Récipient de stockage de disques de média selon la revendication 2, **caractérisé en ce que** la couche faisant barrière (27) comprend au moins deux couches imprimées (25, 26) avec un pigment blanc, de préférence au moins deux couches sérigraphiées.

4. Récipient de stockage de disques de média selon l'une quelconque des revendications 1 à 3, **caractérisé en ce que** la feuille d'information sur les disques de média (14) comprend au moins une région transparente (33-37) qui est bordée par une couleur imprimée du premier dessin imprimé (24).

5. Récipient de stockage de disques de média selon la revendication 4, **caractérisé en ce que** ladite au moins une région transparente (33-37) est en outre bordée par ladite au moins une couche faisant barrière (27) et est bordée par une couleur imprimée du deuxième dessin imprimé (28).

6. Récipient de stockage de disques de média selon l'une quelconque des revendications 1 à 5, **caractérisé en ce que** le deuxième dessin imprimé (28) est une impression couleur CMYK (cyan - magenta - jaune - noir), de préférence une impression offset.

7. Récipient de stockage de disques de média selon l'une quelconque des revendications 1 à 6, **caractérisé en ce que** le premier dessin imprimé (24) est une impression couleur CMYK (cyan - magenta - jaune - noir), de préférence une impression offset.

8. Récipient de stockage de disques de média selon l'une quelconque des revendications 1 à 7, **caractérisé en ce que** sensiblement la totalité de la surface du côté intérieur (22) de la feuille d'information sur les disques de média qui est alignée avec la section avant (2) de la partie de corps (1) est collée à ladite section avant.

9. Récipient de stockage de disques de média selon l'une quelconque des revendications 1 à 8, **caractérisé en ce que** sensiblement la totalité de la surface du côté intérieur (22) de la feuille d'information sur les disques de média qui est alignée avec la section arrière (3) de la partie de corps (1) est collée à ladite section arrière.

10. Récipient de stockage de disques de média selon l'une quelconque des revendications 1 à 9, **caractérisé en ce que** sensiblement la totalité de la surface du côté intérieur (22) de la feuille d'information sur les disques de média qui est alignée avec la section de charnière (4) de la partie de corps (1) est collée à ladite section de charnière.

11. Récipient de stockage de disques de média selon l'une quelconque des revendications 2 à 10, **caractérisé en ce que** le pigment blanc est le dioxyde de titane.

12. Procédé de montage d'une feuille d'information sur les disques de média (14) sur un récipient de stockage de disques de média comprenant une partie de corps (1) présentant une section avant (2) interconnectée avec une section arrière (3) par l'intermédiaire d'une section de charnière (4), ladite section de charnière étant intégrée à la section avant et à la section arrière par l'intermédiaire de parties de bord allongées (13) constituées d'un matériau flexible, la feuille d'information sur les disques de média (14) étant positionnée avec son côté intérieur (22) orienté vers le haut, et avec un premier dessin imprimé (24) sur le côté extérieur (23) de la feuille d'information sur les disques de média qui est visible à travers le côté intérieur orienté vers le haut (22) de la feuille d'information sur les disques de média, et au moins une couche faisant barrière (27) imprimée au-dessus dudit premier dessin imprimé (24), et avec un deuxième dessin imprimé orienté vers le bas (28) imprimé au-dessus de ladite au moins une couche faisant barrière, et le récipient de stockage de disques de média fermé étant positionné avec sa section de charnière (4) orientée vers le bas en direction d'une section intermédiaire du premier dessin imprimé (24) et étant déplacé vers le bas en contact avec la feuille d'information sur les disques de média (14), et ensuite des éléments de pression exerçant simultanément une pression depuis l'extérieur de la feuille d'information sur les disques de média (14) sur la section arrière (3) et la section avant (2) afin de coller la feuille (14) au côté extérieur du récipient à des distances encore croissantes de la section de charnière (4) jusqu'à ce que la feuille d'information sur les disques de média (14) soit complètement collée à la section arrière (3) et à la section avant (2).

13. Procédé selon la revendication 12, **caractérisé en ce que** les éléments de pression exécutent des mouvements de balayage dirigés vers le haut et vers l'extérieur le long de la section arrière (3) et de la section avant (2).
